# EUROPEAN PATENT APPLICATION

(11) **EP 4 818 051 A1**
(43) Date of publication of application: **07.10.2026**
(21) Application number: 25758224.7
(22) Date of filing: 14.01.2025
(51) Int. Cl.: B64G 1/40, B64G 1/44, B64G 1/50, B64G 1/58

(54) **ROCKET SYSTEM AND FUEL TANK SYSTEM**

(30) Priority: 20.02.2024 JP 2024023789
(71) Applicant: Mitsubishi Heavy Industries, Ltd., Chiyoda-ku Tokyo 100-8332 (JP)
(72) Inventor: NAKAMICHI, Kenji, Tokyo 100-8332 (JP); HARADA, Motoshi, Tokyo 100-8332 (JP); ISHIKAWA, Keitaro, Tokyo 100-8332 (JP)
(74) Representative: Hoffmann Eitle
(86) International application number: PCT/JP2025/000840
(87) International publication number: WO 2025/177727

(57) **Abstract**

Provided are a fuel tank system and a rocket system capable of effectively utilizing evaporation gas of fuel. The rocket system according to the present disclosure includes: a fuel tank filled with fuel; and cooling piping that is connected to the fuel tank and through which boil-off gas of the fuel flows. The boil-off gas flowing through the cooling piping cools the fuel tank.

## Description

### Technical Field

The present disclosure relates to a rocket system and a fuel tank system.

### Background Art

Liquid fuels such as liquid hydrogen or liquid methane, which are cooled to a cryogenic temperatures and then stored in a fuel tank, have posed a problem in that heat flowing into the fuel tank from the outside warms the liquid fuel to boiling points thereof, thereby causing evaporation thereof.

For example, PTL 1 discloses a cryogenic propellant storage device for a liquid rocket, cryogenic propellant storage device being provided with a configuration for reliquefying and storing an evaporation gas of the cryogenic propellant.

### Citation List

### Patent Literature

[PTL 1] Japanese Patent No. 6159641

### Summary of Invention

However, in the prior art described in PTL 1, the loss due to the evaporation of the cryogenic propellant is reduced by reliquefying the evaporation gas of the cryogenic propellant, but it is required to reduce the energy required for the reliquefaction. In addition, it is required to effectively utilize the evaporation gas of the fuel in the fuel tank.

The present disclosure has been made in view of the above-described problems, and an object of the present disclosure is to provide a rocket system and a fuel tank system that can effectively utilize an evaporation gas of fuel.

### Solution to Problem

To solve the above-described problems and achieve the object, a rocket system according to the present disclosure includes a fuel tank filled with fuel, and a cooling piping connected to the fuel tank and through which boil-off gas of the fuel flows, in which the boil-off gas flowing through the cooling piping cools the fuel tank.

To solve the above-described problems and achieve the object, a fuel tank system according to the present disclosure includes a fuel tank filled with fuel, and a cooling piping through which boil-off gas of the fuel in the fuel tank flows, in which the boil-off gas flowing through the cooling piping cools the fuel tank.

According to the present disclosure, it is possible to provide a rocket system and a fuel tank system that can effectively utilize an evaporation gas of fuel.

### Brief Description of Drawings

FIG. 1 is a schematic diagram showing a structure of a rocket system according to the present disclosure.
FIG. 2 is a schematic diagram showing a structure of a rocket body according to the present disclosure.
FIG. 3 is a schematic diagram showing a configuration of a fuel tank system according to the present disclosure.
FIG. 4 is a schematic diagram showing a structure of an upper end portion of a fuel tank according to the present disclosure.
FIG. 5 is a schematic diagram showing a first example of a structure of a skirt portion of the fuel tank according to the present disclosure.
FIG. 6 is a schematic diagram showing a second example of the structure of the skirt portion of the fuel tank according to the present disclosure.
FIG. 7 is a schematic diagram showing a structure of the fuel tank according to the present disclosure.
FIG. 8 is a schematic diagram showing a structure of a second heat insulating material according to the present disclosure.
FIG. 9 is a schematic diagram showing a structure of a third heat insulating material according to the present disclosure.
FIG. 10 is a schematic diagram showing a configuration of an oxidizer tank system according to the present disclosure.

### Description of Embodiments

Hereinafter, embodiments of the present disclosure will be described in detail with reference to the drawings. The present disclosure is not limited to the embodiment described below.

### (Configuration of rocket system)

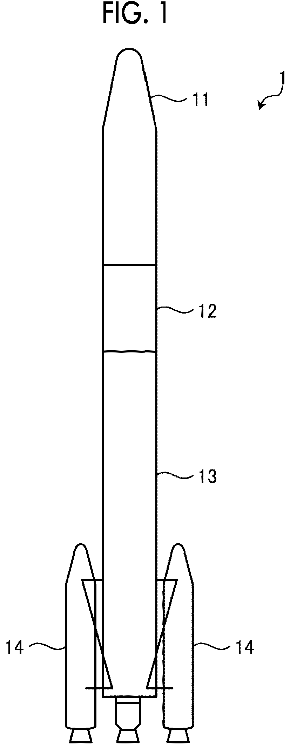

Next, a configuration of the rocket system 1 according to the present disclosure will be described with reference to FIG. 1. FIG. 1 is a schematic diagram showing a structure of a rocket system according to the present disclosure. The rocket system 1 according to the present disclosure includes a fairing 11, a second-stage rocket 12, a first-stage rocket 13, and a solid rocket booster 14. As shown in FIG. 1, the fairing 11 is provided at a tip of the second-stage rocket 12, and the solid rocket booster 14 is connected to a side surface of the first-stage rocket 13.

The rocket system 1 carries a payload such as an artificial satellite or a supply vehicle inside the fairing 11 provided at the tip of the second-stage rocket 12. In the rocket system 1, after the solid fuel of the solid rocket booster 14 connected to the first-stage rocket 13 is combusted to launch the rocket system 1, the fairing 11 provided at the tip of the second-stage rocket 12 is separated, and then the first-stage rocket 13 and the second-stage rocket 12 are separated from each other, and the second-stage rocket 12 travels in outer space over a predetermined period. In the following description, the first-stage rocket 13 or the second-stage rocket 12 of the rocket system 1 is referred to as a rocket body 2.

### (Configuration of rocket body)

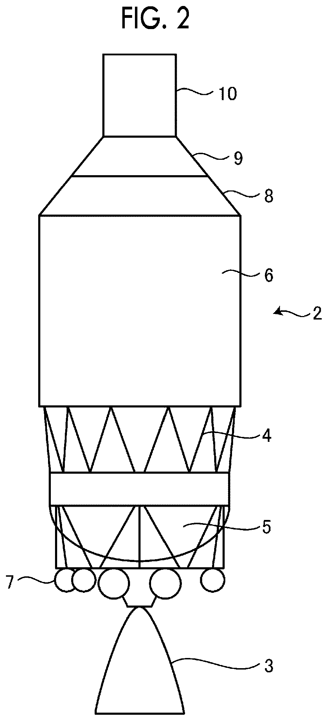

Next, a configuration of the rocket body 2 according to the present disclosure will be described with reference to FIG. 2. FIG. 2 is a schematic diagram showing a structure of a rocket body according to the present disclosure. The rocket body 2 includes a rocket engine 3, a frame 4, an oxidizer tank system 5, a fuel tank system 6, a gas accumulator 7, a payload support structure (PSS) 8, a payload attachment fitting (PAF) 9, and a payload 10. It is noted that the payload support structure 8, the payload attachment fitting 9, and the payload 10 may not be provided in a case where the rocket body 2 is the first-stage rocket 13.

The rocket engine 3 generates thrust by combusting fuel. Specifically, the rocket engine 3 generates thrust by mixing and combusting the fuel supplied from the fuel tank system 6 and the oxidizer supplied from the oxidizer tank system 5. As shown in FIG. 2, the rocket engine 3 is provided on a lower side of the oxidizer tank system 5.

The frame 4 is connected to the oxidizer tank system 5 and the fuel tank system 6 to support the oxidizer tank system 5 and the fuel tank system 6. The frame 4 may be formed by a truss structure forming a plurality of triangles as shown in FIG. 2. The frame 4 includes a first frame member provided on a side of the oxidizer tank system 5, a second frame member provided on a side of the fuel tank system 6, and a strength member provided between the first frame member and the second frame member.

The oxidizer tank system 5 includes, for example, an oxidizer tank that stores liquid oxygen as an oxidizer. The oxidizer tank system 5 is capable of supplying the oxidizer toward the rocket engine 3 by supplying the working gas from the gas accumulator 7. Details of the configuration of the oxidizer tank system 5 will be described below.

The fuel tank system 6 includes, for example, a fuel tank that stores liquid hydrogen or liquid methane as fuel. The fuel tank system 6 is capable of supplying the liquid hydrogen toward the rocket engine 3 by supplying the working gas from the gas accumulator 7. Details of the configuration of the fuel tank system 6 will be described below.

The gas accumulator 7 is capable of supplying the pressurized working gas (for example, helium gas) toward the oxidizer tank system 5 and the fuel tank system 6. In addition, the gas accumulator 7 may be capable of supplying the pressurized working gas toward the rocket engine 3, and the thruster 20 provided in the rocket body 2 for attitude control and orbit correction, and the like, in addition to the oxidizer tank system 5 and the fuel tank system 6. It is noted the working gas is not limited to the helium gas, and any inert gas may be used. For example, a nitrogen gas or an argon gas may be used.

The payload support structure 8 is a support structure that supports the payload 10, and is connected to one end portion of both end portions of the fuel tank system 6. For example, the payload support structure 8 may be formed in a cylindrical shape that is tapered from a side of an end portion connected to the fuel tank system 6 toward a side of the payload 10. For example, an inside of the payload support structure 8 may be a hollow space, one end portion of both end portions of the payload support structure 8 may be fixed to the fuel tank system 6, and a payload attachment fitting 9 may be connected to the other end portion.

The payload attachment fitting 9 has a function of separating the payload 10, and is provided at one end portion of both end portions of the payload support structure 8. For example, an end portion of the payload attachment fitting 9 on a side connected to the payload support structure 8 has the same size as the end portion of the payload support structure 8. For example, the payload attachment fitting 9 may be formed in a cylindrical shape that is tapered from a side of the payload support structure 8 toward a side of the payload 10. For example, an inside of the payload attachment fitting 9 may be a hollow space. One end portion of both end portions of the payload attachment fitting 9 is fixed to the payload support structure 8, and the payload 10 is detachably mounted on the other end portion.

### (Configuration of fuel tank system)

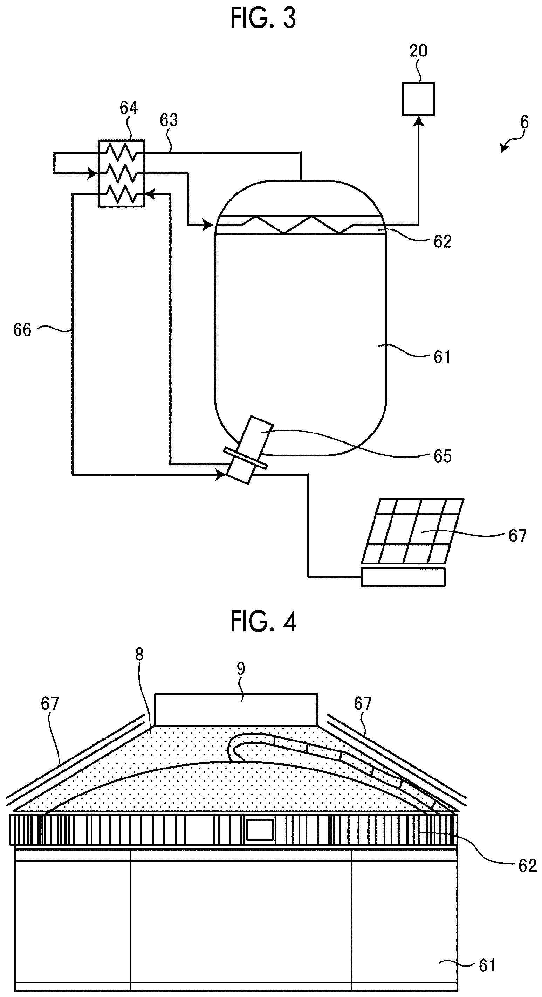

Next, a configuration of the fuel tank system 6 according to the present disclosure will be described with reference to FIG. 3. FIG. 3 is a schematic diagram showing a configuration of a fuel tank system according to the present disclosure. As shown in FIG. 3, the fuel tank system 6 according to the present disclosure includes a fuel tank 61 including a skirt portion 62, a cooling piping 63, a heat exchange unit 64, a chiller 65, a refrigerant piping 66, and a solar cell panel 67. Hereinafter, these configurations will be described in order. The fuel tank system 6 further includes a first heat insulating material 100, a second heat insulating material 200, and a third heat insulating material, which will be described later.

The fuel tank 61 is a storage container that stores fuel. The fuel tank 61 may be manufactured by a 2000 series aluminum alloy (Al-Cu-based alloy), a 7000 series aluminum alloy (Al-Zn-Mg-based alloy), or the like. In addition, the fuel tank 61 includes a cylinder portion 611 having a cylindrical shape and a dome portion 612. The dome portion 612 has a shape that covers an end portion of the cylinder portion 611, and may be formed of, for example, a curved surface or a combination of a curved surface and a flat surface. In other words, the dome portion 612 may be formed in a shape of a hemisphere, a half ellipsoid of revolution, or a shape formed by combining and connecting a plane and a surface of revolution. The cylinder portion 611 is manufactured by welding together bent machined panels integrally provided with ribs, the inner surfaces of the machined panels being machined in a lattice pattern to form what is called an isogrid structure. The dome portion 612 is manufactured by spinning, in which an aluminum plate is pressed into a dome shape while being rotated. Then, the fuel tank 61 can be manufactured by welding the formed cylinder portion 611 and the dome portion 612 in a circumferential direction.

It is noted that as a welding method used for manufacturing the fuel tank 61, tungsten inert gas (TIG) welding, friction stir welding (FSW), or the like may be used. By using the friction stir welding (FSW), a pre-process of welding work is not required. Therefore, it is possible to shorten a working time of the welding work, and it is possible to achieve an effect of enhancing stability of welding quality and enhancing reliability.

The skirt portion 62 is connected to one end portion of both end portions of the cylinder portion 611 of the fuel tank 61 and is formed in a cylindrical shape. In addition, the other end portion of the skirt portion 62 with respect to the end portion connected to the cylinder portion 611 of the fuel tank 61 is connected to the payload support structure 8 to support the payload support structure 8. As shown in FIG. 3, the cooling piping 63 that has passed through the heat exchange unit 64 is provided inside the skirt portion 62. The cooling piping 63 that has passed through the skirt portion 62 is connected to the thruster 20. Details of the skirt portion 62 will be described below.

The cooling piping 63 is piping through which boil-off gas of the fuel flows. The cooling piping 63 may be formed of a material having a high thermal conductivity, and may be formed of, for example, an aluminum alloy, stainless steel, Hastelloy (registered trademark), or the like. The cooling piping 63 is connected to a top portion of the dome portion 612 of the fuel tank 61. Therefore, the boil-off gas of the fuel filled in the fuel tank 61 flows into the cooling piping 63 due to an increase in pressure.

At least a part of a section of the cooling piping 63 is provided at a position where the fuel tank 61 can be cooled by the boil-off gas flowing inside the cooling piping 63. The at least a part of the section of the cooling piping 63 may be provided at any position where the fuel tank 61 can be cooled, but is provided at a position within a predetermined distance range from a surface of the fuel tank 61, and may be provided at a position in contact with the surface of the fuel tank 61. Although details will be described below, in the present embodiment, a part of the section of the cooling piping 63 may be provided in contact with an inner surface of the skirt portion 62 of the fuel tank 61.

In addition, in the present embodiment, the cooling piping 63 is connected to the heat exchange unit 64. In the present embodiment, the cooling piping 63 is connected to the heat exchange unit 64 at a position on an upstream side in a flow direction of the boil-off gas with respect to a position where the fuel tank 61 is cooled (in the present example, a position in contact with the inner surface of the skirt portion 62 of the fuel tank 61).

The heat exchange unit 64 performs heat exchange between refrigerant of a chiller 65, which will be described below, and the boil-off gas flowing through the cooling piping 63. The heat exchange unit 64 may perform heat exchange by generating heat conduction or heat transfer between the cooling piping 63 through which the boil-off gas flows and the refrigerant of the chiller 65 by bringing the refrigerant into contact with the cooling piping 63. For example, the heat exchange unit 64 may be a multi-tube heat exchanger that is a heat exchanger having a configuration in which a large number of thin circular tubes are disposed inside a thick cylindrical body, and that performs heat exchange between a fluid inside the body and a fluid inside the circular tubes. That is, as shown in FIG. 3, the heat exchange unit 64 may be connected to a refrigerant piping 66 through which the refrigerant of the chiller 65 flows.

The chiller 65 includes a compressor that compresses the refrigerant and the refrigerant piping 66 that circulates the refrigerant. The compressor may be a mechanical turbo compressor such as a centrifugal compressor including an impeller, a bearing, or the like. The refrigerant may be, for example, liquid helium. As a result, the chiller 65 can realize cooling by a turbo Brayton cycle. It is noted that the chiller 65 may be realized by active magnetic regenerative refrigeration (AMRR) that uses a phenomenon in which heat is released when a magnetic field is applied to a magnetic body and heat is absorbed when the magnetic field is released, using liquid helium as refrigerant.

The refrigerant piping 66 is piping through which the refrigerant of the chiller 65 flows. As shown in FIG. 3, the refrigerant piping 66 is piped from the chiller 65 toward the heat exchange unit 64 and is connected to the heat exchange unit 64. The refrigerant piping 66 is piped to return to the chiller 65 after passing through the heat exchange unit 64. As a result, the refrigerant can be circulated between the heat exchange unit 64 and the chiller 65.

The solar cell panel 67 is a power generation unit that generates power using sunlight. The solar cell panel 67 includes a solar cell that converts sunlight into electricity, and a back electrode that is a substrate of the solar cell, and a third heat insulating material is provided on a surface of the back electrode on a side on which the solar cell is not provided. The solar cell may be, for example, a thin film solar cell. The thin film solar cell may be realized by an InGaP/GaAs double-junction solar cell or an InGaP/GaAs/Ge triple-junction solar cell.

The InGaP/GaAs double-junction solar cell and the InGaP/GaAs/Ge triple-junction solar cell each have two or three different band gaps, and solar cells using semiconductors that convert sunlight in different wavelength bands into electricity are electrically connected in series. Therefore, the output voltage of the integrated solar cell is the sum of the output voltages of the solar cells, and is several times higher than the output voltage of a silicon solar cell. Therefore, by using the InGaP/GaAs double-junction solar cell and the InGaP/GaAs/Ge triple-junction solar cell, the power generation efficiency of solar power generation can be increased.

It is noted that the solar cell may be realized by a lattice mismatched triple-junction solar cell. According to the lattice mismatched triple-junction solar cell, the solar cell can be realized by a thin film of about 20 µm, and can be used by being attached to a curved back electrode due to the flexibility. Therefore, by using the lattice mismatched triple-junction solar cell, it is possible to provide a solar cell even in a position where it has not been possible to install in the related art, and it is possible to increase the amount of power generated by solar power generation.

For the fuel tank system 6 described above, heat flows from sunlight and various components such as the skirt portion 62 connected to the fuel tank 61. On the other hand, according to the configuration of the fuel tank system 6 described above, the boil-off gas of the fuel filled in the fuel tank 61 flows through the cooling piping 63 and flows into the heat exchange unit 64, and heat exchange is performed in the heat exchange unit 64 with the refrigerant of the chiller 65. Therefore, the refrigerant of the chiller 65 can be appropriately cooled by the boil-off gas of the fuel.

Furthermore, since the cooling piping 63 that has passed through the heat exchange unit 64 passes through the inside of the skirt portion 62, the skirt portion 62 and thus the fuel tank 61 can be appropriately cooled by the boil-off gas flowing through the cooling piping 63. Therefore, the fuel filled in the fuel tank 61 can also be appropriately cooled by the chiller 65 that further cools the cooled refrigerant, and the fuel tank 61 can also be appropriately cooled, whereby the boil-off gas of the fuel can be reduced. Provided that the configuration in which the cooling piping 63 is connected to the heat exchange unit 64 to cool the refrigerant of the chiller 65 is not essential.

### (Regarding use of boil-off gas)

Next, the use of the boil-off gas that has passed through the skirt portion 62 will be described. The boil-off gas that has flowed out of the cooling piping 63 of the skirt portion 62 may be used for the fuel of the thruster 20 or the vent retention. Alternatively, the boil-off gas may be released directly from the thruster 20 through the thruster 20. That is, as shown in FIG. 3, the cooling piping 63 may be connected to the thruster 20 after passing through the skirt portion 62. Hereinafter, the thruster 20 and the vent retention will be described.

The thruster 20 is a device that controls the attitude of the rocket body 2 by thrust. The thruster 20 may be a chemical propulsion thruster that generates a hightemperature and high-pressure gas by catalytic decomposition or combustion of fuel to obtain thrust. The chemical propulsion thruster includes a fuel valve that controls the supply of fuel, an injector that injects and mixes the fuel, and a combustor that combusts the injected fuel and accelerates the generated combustion gas. It is noted that as the fuel, hydrogen or a hydrazine-based fuel may be used. As the oxidizer, dinitrogen tetroxide may be used. Since by using the boil-off gas that has passed through the skirt portion 62 as the fuel of the thruster 20, the boil-off gas is appropriately warmed in the skirt portion 62, thrust can be appropriately generated. Even in a case where the boil-off gas is released directly from the thruster 20, thrust can be obtained to some extent by the mass of hydrogen and the release rate from the thruster 20 due to the pressure thereof. That is, even in a case where the oxidizer of the thruster 20 disappears, the boil-off gas can be released directly from the thruster 20 to obtain thrust.

It is noted that the thruster 20 may be a direct current (DC) arcjet. The DC arcjet includes a direct current cathode, a direct current anode, a nozzle, and an insulator. A fuel gas, which may be hydrogen, in the DC arcjet is partially ionized by pulse discharge at a high voltage between the direct current cathode and the direct current anode. The fuel gas is heated by Joule heating by the direct current arc discharge, and ionization further progresses, resulting in a high-enthalpy gas. The generated high-enthalpy gas expands through the nozzle, and thrust is generated by the accelerated gas. Even in a case where the thruster 20 is a DC arcjet, in a case where the boil-off gas is released as it is, similarly, and thrust can be obtained to some extent depending on the mass of hydrogen and the release velocity from the thruster 20 due to the pressure thereof.

The vent retention controls the attitude of the rocket body 2 by the thrust of the thruster 20 for retention, thereby holding the fuel at the bottom portion of the fuel tank 61. Since depending on the attitude of the rocket body 2, the fuel may not be held at the bottom portion of the fuel tank 61 due to gravity, it is necessary to statically determine the fuel at the bottom portion of the fuel tank 61 by the thrust of the thruster 20 for retention. That is, the thruster 20 for retention is jetted to the rear of the body axis of the rocket body 2 to statically determine the liquid fuels of the fuel tank 61 at the tank bottom portion.

According to the fuel tank system 6 described above, the fuel tank 61 can be cooled by flowing the boil-off gas after heat exchange into the cooling piping 63 wound around the inner surface of the skirt portion 62. Furthermore, the boil-off gas that has passed through the skirt portion 62 can be used as a fuel for the vent retention or the thruster 20. The boil-off gas flowing through the cooling piping 63 in the skirt portion 62 is appropriately used as a fuel for the thruster 20 because the boil-off gas is heated to an appropriate temperature by heat exchange between the skirt portion 62 and the fuel tank 61 connected to the skirt portion 62.

### (Regarding structure of upper end portion of fuel tank)

Next, a structure of an upper end portion of the fuel tank 61 according to the present disclosure will be described with reference to FIG. 4. FIG. 4 is a schematic diagram showing a structure of an upper end portion of a fuel tank according to the present disclosure. As shown in FIG. 4, a payload support structure 8 is connected to one end portion of both end portions of the fuel tank 61, and a payload attachment fitting 9 is provided on the payload support structure 8. A solar cell panel 67 is provided on an outer peripheral surface of the payload support structure 8. In addition, the skirt portion 62 is connected to one end portion of the fuel tank 61. Accordingly, the solar cell panel 67 can appropriately receive sunlight while the rocket body 2 travels in the outer space. Therefore, since the solar cell panel 67 can appropriately generate power, the chiller 65 can be appropriately driven by using the power.

Next, a structure of the skirt portion 62 of the fuel tank 61 will be described. The skirt portion 62 is formed in a cylindrical shape, and includes the cooling piping 63 on an inner surface side thereof. A shape of the cooling piping 63 provided in the skirt portion 62 may be any shape as long as heat exchange between the boil-off gas flowing through the cooling piping 63 and the skirt portion 62, and heat exchange with the fuel tank 61 via the skirt portion 62 can be realized, and may be, for example, a shape described below.

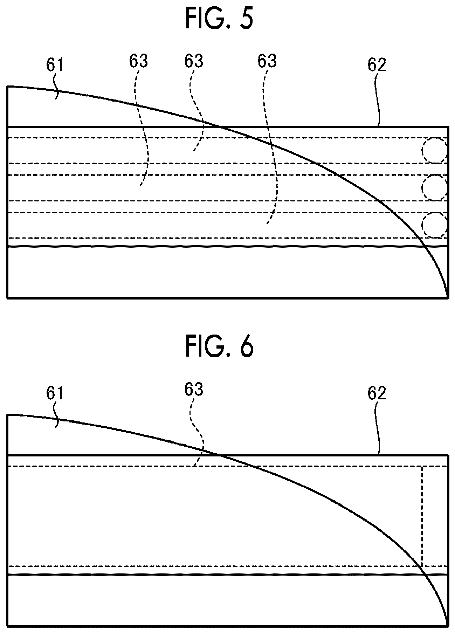

A first example of the shape of the cooling piping 63 provided in the skirt portion 62 will be described with reference to FIG. 5. FIG. 5 is a schematic diagram showing a first example of a structure of a skirt portion of the fuel tank according to the present disclosure. As shown in FIG. 5, in the skirt portion 62 of the fuel tank 61, the cooling piping 63 having a cylindrical cross section is wound around the inner surface. It is noted that as shown in FIG. 5, three cooling pipings 63 having a cylindrical cross section may be wound around the skirt portion 62 of the fuel tank 61, or a larger number of cooling pipings 63 may be wound around the skirt portion 62. In addition, the skirt portion 62 and the cooling piping 63 may be connected to each other by, for example, brazing using an Ag-Pd brazing filler metal.

A second example of the shape of the cooling piping 63 provided in the skirt portion 62 will be described with reference to FIG. 6. FIG. 6 is a schematic diagram showing a second example of the structure of the skirt portion of the fuel tank according to the present disclosure. As shown in FIG. 6, the cooling piping 63 may be piping having a rectangular cross-sectional shape and having a hollow inside the rectangle. Then, as shown in FIG. 6, a side surface of the cooling piping 63 on a long side of the rectangle may be brought into contact with the inner surface of the skirt portion 62 and may be disposed to be wound around the inner surface of the skirt portion 62. Accordingly, since a contact area between the cooling piping 63 and the inner surface of the skirt portion 62 can be increased, heat exchange between the boil-off gas and the inner surface of the skirt portion 62 can be promoted.

It is noted that the structure of the fuel tank 61 is not limited to the example described above, and for example, a structure may be adopted in which the cooling piping 63 is wound around the entire outer peripheral surface of the cylinder portion 611 of the fuel tank 61. In addition, a structure may be adopted in which the cooling piping 63 is wound around the outer peripheral surface of the dome portion 612 on the side where the fuel is stored in the fuel tank 61. Accordingly, the fuel tank 61 and the fuel filled in the fuel tank 61 can be appropriately cooled by the boil-off gas.

In addition, the present disclosure is not limited to the aspect in which the cooling piping 63 is provided in the skirt portion 62 of the fuel tank 61, and when the fuel tank 61 is used as an inner tank, a jacket tank type heat exchanger may be adopted in which heat exchange is performed with the fuel tank 61 by providing an outer tank that directly covers the outer peripheral surface of the inner tank and causing the boil-off gas to flow into the outer tank.

According to the structure of the fuel tank 61 described above, the fuel tank 61 can be appropriately cooled by the boil-off gas generated by the evaporation of the fuel inside the fuel tank 61. Therefore, the heat input from the outside to the fuel tank 61 can be appropriately prevented, and the evaporation amount of the fuel filled in the fuel tank 61 can be reduced.

### (Regarding heat insulating material)

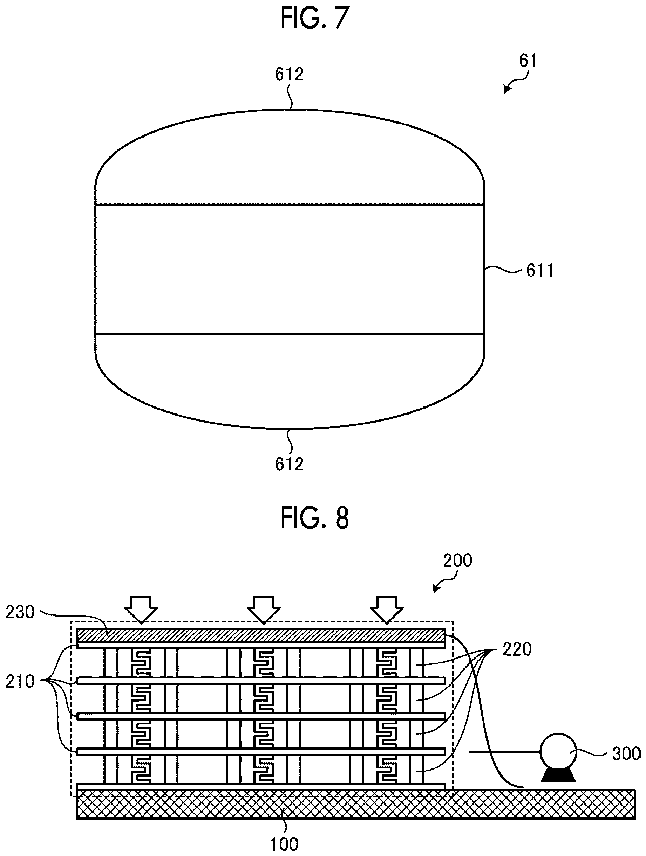

Next, a position of a heat insulating material provided in the fuel tank 61 will be described with reference to FIG. 7. FIG. 7 is a view showing a structure of the fuel tank according to the present disclosure. As shown in FIG. 7, the fuel tank 61 includes the cylinder portion 611 and the dome portion 612. The first heat insulating material 100 is provided on the outer peripheral surface of the cylinder portion 611, and the second heat insulating material 200 is provided on the first heat insulating material 100. In addition, the first heat insulating material 100 is provided on the outer peripheral surface of the dome portion 612, and a third heat insulating material is provided on the first heat insulating material 100.

Hereinafter, the heat insulating materials (the first heat insulating material 100, the second heat insulating material 200, and the third heat insulating material) applied to the fuel tank 61 will be described. Hereinafter, these configurations will be described in order.

The first heat insulating material 100 is a heat insulating material provided on the outer peripheral surface of the cylinder portion 611 and the dome portion 612 of the fuel tank 61. The first heat insulating material 100 may be, for example, a polyisocyanurate foam (PIF). The poly-isocyanurate foam is a type of foamed plastic obtained by modifying a rigid urethane foam to have heat resistance. A thermal conductivity of the polyisocyanurate foam is 0.020 W/mK, and the polyisocyanurate foam has an extremely low thermal conductivity. Therefore, it is possible to appropriately prevent heat input to the fuel tank 61 from the outside.

In addition, the first heat insulating material 100 may be a nanoparticle aerogel heat insulating material. The nanoparticle aerogel heat insulating material has a floating structure in which silica nanoparticles are not in contact with each other, and the contact between molecules is suppressed by a fine space formed by the silica nanoparticles. Therefore, it is possible to prevent heat transfer. Since the nanoparticle aerogel heat insulating material also has a thermal conductivity similar to that of the poly-isocyanurate foam, it is possible to appropriately prevent heat input to the fuel tank 61 from the outside.

Accordingly, since in a case where the fuel is liquid hydrogen, the boiling point of hydrogen is -253°C, the evaporation amount of the liquid hydrogen can be reduced by covering the outer peripheral surface of the fuel tank 61 with the first heat insulating material 100, and preventing the inflow of heat from the surroundings.

The second heat insulating material 200 is a heat insulating material provided on the first heat insulating material 100 provided on the outer peripheral surface of the cylinder portion 611 of the fuel tank 61. The second heat insulating material 200 may be load-bearing multilayer insulation with non-interlayer-contact spacers (LB NICS MLI).

The load-bearing multilayer insulation with non-interlayer-contact spacers (LB NICs MLI) is configured such that multilayer insulation (MLI), including a film 210 that prevents radiative heat transfer by vapor-depositing aluminum on polyimide, which is an engineering plastic having high heat resistance, and a spacer 220 formed of a material having high heat resistance, such as an engineering plastic, is covered with a vacuum film and evacuated by a vacuum pump 300. Therefore, high heat insulation performance can be maintained even in an atmospheric environment.

Here, a structure of the load-bearing multilayer insulation with non-interlayer-contact spacers will be described with reference to FIG. 8. FIG. 8 is a schematic diagram showing a structure of a second heat insulating material according to the present disclosure. As shown in FIG. 8, the load-bearing multilayer insulation with non-interlayer-contact spacers has a structure covered with a flat plate formed of fiber reinforced plastic 230 (carbon fiber reinforced plastics (CFRP)) on the multilayer insulation (MLI). Then, the inside of the load-bearing multilayer insulation with non-interlayer-contact spacers is evacuated by the vacuum pump 300. Therefore, high heat insulation performance can be maintained even at a portion exposed to the atmosphere. By providing the second heat insulating material 200 described above on the first heat insulating material 100, it is possible to appropriately prevent heat input to the fuel tank 61 due to radiation of sunlight.

The third heat insulating material is a heat insulating material provided on the first heat insulating material 100 provided on the outer peripheral surface of the dome portion 612 of the fuel tank 61. The third heat insulating material may be, for example, a multilayer insulation with non-interlayer-contact spacers (NICs MLI). The multilayer insulation with non-interlayer-contact spacers includes a film 210 that prevents radiative heat transfer by vapor-depositing aluminum on polyimide, which is an engineering plastic having high heat resistance, and a spacer 220 formed of a material having high heat resistance, such as an engineering plastic. The multilayer insulation with non-interlayer-contact spacers is formed by stacking about 10 to 20 films 210 and spacers 220 alternately.

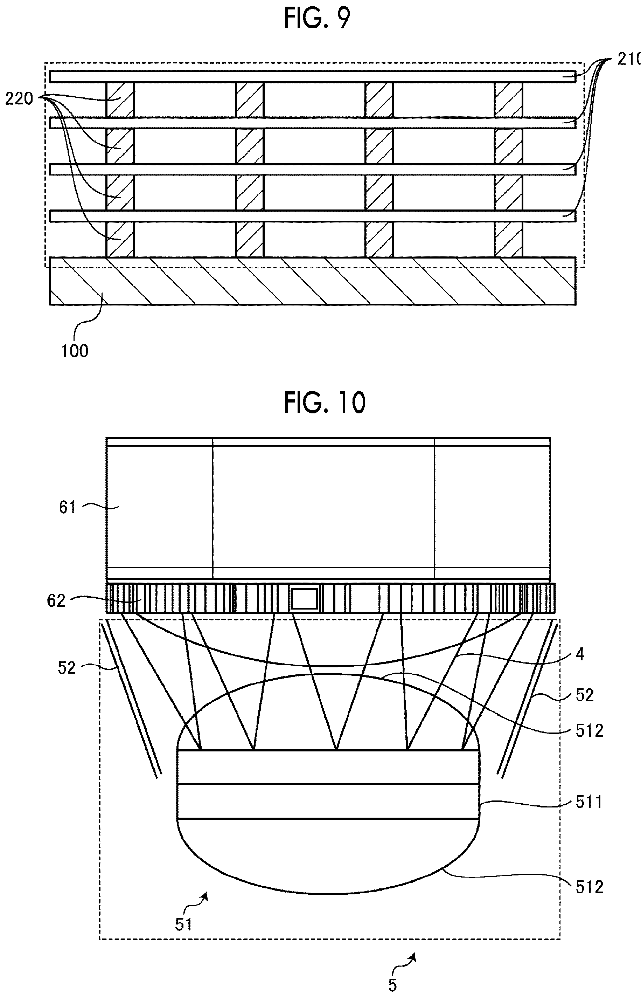

Here, a structure of the multilayer insulation with non-interlayer-contact spacers (NICs MLI) will be described with reference to FIG. 9. FIG. 9 is a schematic diagram showing a structure of a third heat insulating material according to the present disclosure. As shown in FIG. 9, the multilayer insulation with non-interlayer-contact spacers includes a film 210 and a spacer 220. As shown in FIG. 9, the multilayer insulation with non-interlayer-contact spacers has a structure in which the spacers 220 are disposed between the films 210 and are alternately stacked with the films 210. As a result, it is possible to eliminate the uncertain interlayer contact of the film 210 and to significantly improve the heat insulation performance from the conventional MLI in which the films 210 are in contact with each other between layers.

As a result, by providing the load-bearing multilayer insulation with non-interlayer-contact spacers in which the space between the films 210 is evacuated on the cylinder portion 611 exposed to the atmosphere and providing the multilayer insulation with non-interlayer-contact spacers on the dome portion 612 that is not exposed to the atmosphere, the fuel tank 61 can be appropriately heat-insulated even in outer space by appropriately heat-insulating the cylinder portion 611 exposed to the atmosphere and appropriately heat-insulating the dome portion 612, which is not exposed to the atmosphere, with multilayer insulation with non-interlayer-contact spacers. Therefore, the inflow of heat into the fuel tank 61 is prevented by the heat insulating material, and the boil-off gas of the fuel in the fuel tank 61 can be appropriately reduced.

### (Regarding oxidizer tank system)

Next, a configuration of the oxidizer tank system 5 will be described with reference to FIG. 10. FIG. 10 is a schematic diagram showing a configuration of an oxidizer tank system according to the present disclosure. As shown in FIG. 10, the oxidizer tank system 5 according to the present disclosure includes an oxidizer tank 51 and a solar cell panel 52 as main components. It is noted that the oxidizer tank system 5 further includes a first heat insulating material 100, a second heat insulating material 200, and a third heat insulating material.

The oxidizer tank 51 is a storage container that stores an oxidizer. The oxidizer tank 51 may be made of an aluminum alloy. The oxidizer tank 51 can be manufactured in the same manner as the fuel tank 61 described above. As shown in FIG. 9, the oxidizer tank 51 includes a cylindrical cylinder portion 511 and a dome portion 512. That is, the oxidizer tank 51 can be manufactured by welding the cylinder portion 511 and the dome portion 512 in a circumferential direction.

The oxidizer tank 51 includes a first heat insulating material 100 applied to an outer peripheral surface of the cylinder portion 511 of the oxidizer tank 51, and a third heat insulating material provided on an outer peripheral surface of the first heat insulating material 100. It is noted that since the first heat insulating material 100 and the third heat insulating material may be the same as those described in the section of the description of the fuel tank system 6 described above, the detailed description thereof will be omitted.

In addition, the oxidizer tank 51 includes a first heat insulating material 100 applied to an outer peripheral surface of the dome portion 512 of the oxidizer tank 51, and a third heat insulating material provided on an outer peripheral surface of the first heat insulating material 100. Since the first heat insulating material 100 and the third heat insulating material may be the same as those described in the section of the description of the fuel tank system 6 described above, the detailed description thereof will be omitted.

The solar cell panel 52 is a solar cell that generates power by sunlight. As shown in FIG. 10, the solar cell panel 52 is disposed between the fuel tank 61 and the oxidizer tank 51. The solar cell panel 52 may be the same as the solar cell panel 67 provided in the fuel tank system 6. The solar cell panel 52 includes a solar cell that converts sunlight into electricity, and a back electrode that is a substrate of the solar cell, and a third heat insulating material is provided on a surface of the back electrode on a side on which the solar cell is not provided. As a result, the rocket body 2 can generate power by sunlight while traveling in outer space. In addition, it is possible to prevent heat generated by the power generation of the solar cell panel 52 from being transmitted to the oxidizer tank 50.

It is noted that the oxidizer tank system 5 may include a skirt portion, a cooling piping, a heat exchange unit, and a chiller, similarly to the fuel tank system 6. As a result, the oxidizer tank 51 can be cooled by the boil-off gas of the oxidizer evaporated from the oxidizer tank.

According to the oxidizer tank system 5 described above, heat input from the outside to the oxidizer filled in the oxidizer tank 51 is prevented, whereby the oxidizer tank 51 can be appropriately heat-insulated. Therefore, the evaporation of the oxidizer from the oxidizer tank can be appropriately reduced.

### (Configuration and effect)

A rocket system 1 according to a first aspect of the present disclosure includes a fuel tank 61 filled with fuel, and a cooling piping 63 connected to the fuel tank 61 and through which boil-off gas of the fuel flows, in which the boil-off gas flowing through the cooling piping 63 cools the fuel tank 61.

According to this configuration, the boil-off gas generated by evaporation of the fuel of the fuel tank 61 can be used to cool the fuel tank 61. Therefore, the boil-off gas due to the temperature rise of the fuel can be reduced. Accordingly, it is possible to provide the rocket system 1 that can effectively use the evaporation gas of the fuel.

A rocket system 1 according to a second aspect of the present disclosure is the rocket system 1 according to the first aspect, in which the fuel tank 61 includes a cylindrical cylinder portion 611 and a dome-shaped dome portion 612 having a curved surface connected to both ends of the cylinder portion 611, and the cooling piping 63 is wound around an inner surface of a cylindrical skirt portion 62 connected to one end of the cylinder portion 611 of the fuel tank 61.

According to this configuration, the fuel tank 61 can be appropriately cooled by causing the boil-off gas to flow through the cooling piping 63 wound around the skirt portion 62 of the fuel tank 61. Accordingly, it is possible to provide the rocket system 1 that can effectively use the evaporation gas of the fuel.

A rocket system 1 according to a third aspect of the present disclosure is the rocket system 1 according to the first aspect or the second aspect, further including a thruster 20 that controls an attitude of a rocket body by thrust, in which the cooling piping 63 is connected to the thruster 20, and the boil-off gas is led to the thruster 20 through the cooling piping 63.

According to this configuration, the boil-off gas after the fuel tank 61 is cooled can be led to the thruster 20. Therefore, the boil-off can be used as the fuel or the propellant of the thruster 20. In addition, even in a case where the oxidizer of the thruster 20 disappears, the thrust can be obtained by releasing the boil-off gas as it is from the thruster 20. Accordingly, it is possible to provide the rocket system 1 that can effectively use the evaporation gas of the fuel.

A rocket system 1 according to a fourth aspect of the present disclosure is the rocket system 1 according to any one of the first to third aspects, further including a first heat insulating material 100 applied to an outer peripheral surface of the cylinder portion 611 of the fuel tank 61, and a second heat insulating material 200 provided on an outer peripheral surface of the first heat insulating material 100.

According to this configuration, the fuel tank 61 is covered with two types of heat insulating materials, whereby heat input from the outside can be prevented. Therefore, the evaporation amount of the fuel of the fuel tank 61 can be appropriately reduced. Therefore, it is possible to provide the rocket system 1 that can effectively use the evaporation gas of the fuel while reducing the evaporation amount of the fuel.

A rocket system 1 according to a fifth aspect of the present disclosure is the rocket system 1 according to any one of the first to fourth aspects, further including a first heat insulating material 100 applied to an outer peripheral surface of the dome portion 612 of the fuel tank 61, and a third heat insulating material provided on an outer peripheral surface of the first heat insulating material 100.

According to this configuration, the dome portion 612 of the fuel tank 61 is covered with two types of heat insulating materials, whereby heat input from the outside can be prevented. Therefore, the evaporation amount of the fuel of the fuel tank 61 can be appropriately reduced. Therefore, it is possible to provide the rocket system 1 that can effectively use the evaporation gas of the fuel while reducing the evaporation amount of the fuel.

A rocket system 1 according to a sixth aspect of the present disclosure is the rocket system 1 according to any one of the first to fifth aspects, further including a chiller 65 that cools the fuel filled in the fuel tank 61, and a heat exchange unit 64 that is connected to the cooling piping 63 and a refrigerant piping 66 through which a refrigerant of the chiller 65 flows, and that exchanges heat between the boil-off gas flowing through the cooling piping 63 and the refrigerant flowing through the refrigerant piping 66, in which the boil-off gas flowing through the cooling piping 63 cools the fuel tank 61 after the refrigerant is cooled by the heat exchange unit 64.

According to this configuration, the refrigerant of the chiller 65 can be further used for cooling the fuel tank 61 after the exhaust heat of the refrigerant is recovered by the boil-off gas in which the fuel of the fuel tank 61 is evaporated. Therefore, the boil-off gas due to the temperature rise of the fuel can be reduced. Accordingly, it is possible to provide the rocket system 1 that can effectively use the evaporation gas of the fuel.

A rocket system 1 according to a seventh aspect of the present disclosure is the rocket system 1 according to the sixth aspect, further including a solar cell panel 67 that is provided in the dome portion 612 of the fuel tank 61 and that generates power by sunlight, in which the chiller 65 includes a compressor that compresses the refrigerant, and the compressor is driven by power generated by the solar cell panel 67.

According to this configuration, the compressor can be driven by the power generated by the solar cell panel 67. Therefore, the fuel of the fuel tank 61 can be appropriately cooled by the chiller 65. Therefore, it is possible to provide the rocket system 1 that can effectively use the evaporation gas of the fuel while reducing the evaporation amount of the fuel.

A rocket system 1 according to an eighth aspect of the present disclosure is the rocket system 1 according to the seventh aspect, in which the solar cell panel 67 includes a solar cell that converts sunlight into electricity, and a back electrode that is a substrate of the solar cell, and a third heat insulating material is provided on a surface of the back electrode on a side on which the solar cell is not provided.

According to this configuration, the third heat insulating material can prevent heat generation due to the power generation of the solar cell from being transmitted to the fuel tank 61. Therefore, it is possible to provide the rocket system 1 that can effectively use the evaporation gas of the fuel while reducing the evaporation amount of the fuel.

A rocket system 1 according to a ninth aspect of the present disclosure is the rocket system 1 according to any one of the first to eighth aspects, in which the rocket system 1 according to the present disclosure includes an oxidizer tank 50 that is filled with an oxidizer for oxidizing the fuel and that includes a cylindrical cylinder portion 511 and a semi-spherical dome portion 512 connected to both ends of the cylinder portion 511, a first heat insulating material 100 applied to an outer peripheral surface of the cylinder portion 511 of the oxidizer tank 50, and a third heat insulating material provided on an outer peripheral surface of the first heat insulating material 100.

According to this configuration, the cylinder portion 511 of the oxidizer tank 50 is covered with two types of heat insulating materials, whereby heat input from the outside can be prevented. Therefore, the evaporation amount of the oxidizer of the oxidizer tank 50 can be appropriately reduced.

A rocket system 1 according to a tenth aspect of the present disclosure is the rocket system 1 according to any one of the first to ninth aspects, in which the rocket system 1 according to the present disclosure includes an oxidizer tank 50 that is filled with an oxidizer for oxidizing the fuel and that includes a cylindrical cylinder portion 511 and a semi-spherical dome portion 512 connected to both ends of the cylinder portion 511, a first heat insulating material 100 that is applied to an outer peripheral surface of the dome portion 512 of the oxidizer tank 50, and a third heat insulating material that is provided on an outer peripheral surface of the first heat insulating material 100.

According to this configuration, the dome portion 512 of the oxidizer tank 50 is covered with two types of heat insulating materials, whereby heat input from the outside can be prevented. Therefore, the evaporation amount of the oxidizer of the oxidizer tank 50 can be appropriately reduced.

A fuel tank system 6 according to an eleventh aspect of the present disclosure includes a fuel tank 61 filled with fuel, and a cooling piping 63 through which boil-off gas of the fuel of the fuel tank 61 flows, in which the boil-off gas flowing through the cooling piping 63 cools the fuel tank 61.

According to this configuration, the fuel tank 61 can be appropriately cooled by causing the boil-off gas to flow through the cooling piping 63. Accordingly, it is possible to provide the fuel tank system 6 that can effectively use the evaporation gas of the fuel.

Although the embodiments of the present disclosure have been described above, the embodiments are not limited by the details of the embodiments. The above elements include elements that can be easily assumed by those skilled in the art, and elements that are substantially identical, that is, equivalent elements. Furthermore, the above-described configuration elements can be combined with each other as appropriate. In addition, various omissions, replacements, or modifications of the configuration elements can be made within the scope not departing from the concept of the above-described embodiments.

### Reference Signs List

1: rocket system
11: fairing
12: second-stage rocket (rocket body)
13: first-stage rocket
14: solid rocket booster
2: rocket body
3: rocket engine
4: frame
5: oxidizer tank system
51: oxidizer tank
511: cylinder portion
512: dome portion
6: fuel tank system
61: fuel tank
611: cylinder portion
612: dome portion
62: skirt portion
63: cooling piping
64: heat exchange unit
65: chiller
66: refrigerant piping
67: solar cell panel
7: gas accumulator
8: payload support structure
9: payload attachment fitting
10: payload
20: thruster
100: first heat insulating material
200: second heat insulating material
210: film
220: spacer
230: fiber reinforced plastic
300: vacuum pump

## Claims

1. A rocket system comprising:
a fuel tank filled with fuel; and
cooling piping that is connected to the fuel tank and through which boil-off gas of the fuel flows,
wherein the boil-off gas flowing through the cooling piping cools the fuel tank.

2. The rocket system according to claim 1,
wherein the fuel tank includes a cylindrical cylinder portion and a dome-shaped dome portion having a curved surface connected to both ends of the cylinder portion, and
the cooling piping is wound around an inner surface of a cylindrical skirt portion connected to one end of the cylinder portion of the fuel tank.

3. The rocket system according to claim 1 or 2, further comprising:
a thruster configured to control an attitude of a rocket body by thrust,
wherein the cooling piping is connected to the thruster, and the boil-off gas is led to the thruster through the cooling piping.

4. The rocket system according to claim 2, further comprising:
a first heat insulating material applied to an outer peripheral surface of the cylinder portion of the fuel tank; and
a second heat insulating material provided on an outer peripheral surface of the first heat insulating material.

5. The rocket system according to claim 2 or 4, further comprising:
a first heat insulating material applied to an outer peripheral surface of the dome portion of the fuel tank; and
a third heat insulating material provided on an outer peripheral surface of the first heat insulating material.

6. The rocket system according to claim 1 or 2, further comprising:
a chiller configured to cool the fuel filled in the fuel tank; and
a heat exchange unit connected to the cooling piping and refrigerant piping through which refrigerant of the chiller flows, the heat exchange unit being configured to exchange heat between the boil-off gas flowing through the cooling piping and the refrigerant flowing through the refrigerant piping,
wherein the boil-off gas flowing through the cooling piping cools the refrigerant in the heat exchange unit and then cools the fuel tank.

7. The rocket system according to claim 6, further comprising:
a solar cell panel provided on the dome portion of the fuel tank and configured to generate electric power by sunlight,
wherein the chiller includes a compressor configured to compress the refrigerant, and
the compressor is driven by the electric power generated by the solar cell panel.

8. The rocket system according to claim 7,
wherein the solar cell panel includes a solar cell configured to convert sunlight into electricity, and a back electrode serving as a substrate of the solar cell, and
a third heat insulating material is provided on a surface of the back electrode on a side on which the solar cell is not provided.

9. The rocket system according to claim 1 or 2, further comprising:
an oxidizer tank filled with an oxidizer that oxidizes the fuel and including a cylindrical cylinder portion and a hemispherical dome portion connected to both ends of the cylinder portion;
a first heat insulating material applied to an outer peripheral surface of the cylinder portion of the oxidizer tank; and
a third heat insulating material provided on an outer peripheral surface of the first heat insulating material.

10. The rocket system according to claim 1 or 2, further comprising:
an oxidizer tank filled with an oxidizer that oxidizes the fuel and including a cylindrical cylinder portion and a hemispherical dome portion connected to both ends of the cylinder portion;
a first heat insulating material applied to an outer peripheral surface of the dome portion of the oxidizer tank; and
a third heat insulating material provided on an outer peripheral surface of the first heat insulating material.

11. A fuel tank system comprising:
a fuel tank filled with fuel; and
cooling piping through which boil-off gas of the fuel of the fuel tank flows,
wherein the boil-off gas flowing through the cooling piping cools the fuel tank.
